# EUROPEAN PATENT APPLICATION

(11) **EP 4 831 993 A1**
(43) Date of publication of application: **28.10.2026**
(21) Application number: 24918013.4
(22) Date of filing: 06.08.2024
(51) Int. Cl.: G11B 5/02

(54) **TAPE, DRIVER, TAPE SYSTEM, AND ELECTRONIC DEVICE**

(30) Priority: 17.01.2024 CN 202410076026
(71) Applicant: Huawei Technologies Co., Ltd., Shenzhen, Guangdong 518129 (CN)
(72) Inventor: PU, Guiyou, Shenzhen, Guangdong 518129 (CN)
(74) Representative: Maiwald GmbH
(86) International application number: PCT/CN2024/110206
(87) International publication number: WO 2025/152401

(57) **Abstract**

Embodiments of this application provide a magnetic tape, a drive, a magnetic tape system, and an electronic device, designed to prevent breakage of the magnetic tape in the magnetic tape system from causing the entire magnetic tape system to fail. The magnetic tape system provided in embodiments of this application includes a magnetic tape, a read/write head, a page picker, and a controller. The magnetic tape includes a plurality of storage pages arranged in a stacked manner. During read/write operations performed on the magnetic tape, the controller may determine at least one target storage page from the plurality of storage pages, control the page picker to extract the target storage page, and control the read/write head to read data from the target storage page or write data to the target storage page. Since data is stored in the plurality of storage pages, and the page picker contacts the target storage page to extract the target storage page, the storage page bears less force when compared with a magnetic tape wound around reels, thereby preventing breakage of the magnetic tape in the magnetic tape system from causing the entire magnetic tape system to fail.

## Description

This application claims priority to Chinese Patent Application No. 202410076026.8, filed with the China National Intellectual Property Administration on January 17, 2024 and entitled "MAGNETIC TAPE, DRIVE, MAGNETIC TAPE SYSTEM, AND ELECTRONIC DEVICE", which is incorporated herein by reference in its entirety.

### TECHNICAL FIELD

Embodiments of this application relate to the field of data backup technologies, and specifically, to a magnetic tape, a drive, a magnetic tape system, and an electronic device.

### BACKGROUND

In related technologies, a magnetic tape system includes a first reel, a second reel, and a magnetic tape. One end of the magnetic tape is fastened to the first reel, and the other end of the magnetic tape is fastened to the second reel. A part of the magnetic tape may be wound around the first reel. The magnetic tape is provided with a magnetized area in which data is stored. During operation, a magnetic tape drive generally drives rotation of the second reel to rotate the first reel, thereby unwinding a part of the magnetic tape from the first reel. The part of the magnetic tape extending between the first reel and the second reel moves toward and is wound around the second reel. In this process, the magnetic tape drive may read data from, or write data to the part of magnetic tape extending between the first reel and the second reel.

However, when the magnetic tape drive drives rotation of the second reel to rotate the first reel, the part of the magnetic tape extending between the first reel and the second reel is subjected to tension. If the tension exceeds a threshold that the magnetic tape can bear, the magnetic tape may break, causing the entire magnetic tape system to fail.

### SUMMARY

Embodiments of this application provide a magnetic tape, a drive, a magnetic tape system, and an electronic device, designed to prevent breakage of the magnetic tape in the magnetic tape system from causing the entire magnetic tape system to fail.

To achieve the foregoing objective, the following technical solutions are used in embodiments of this application.

According to an aspect, an embodiment of this application provides a magnetic tape system, including a magnetic tape, a read/write head, a page picker, and a controller. The magnetic tape includes a plurality of storage pages arranged in a stacked manner, and the storage page is configured to store data. The read/write head is configured to read data from the storage page, or write data to the storage page. The controller is electrically connected to both the read/write head and the page picker. The controller is configured to determine at least one target storage page from the plurality of storage pages and control the page picker to extract the target storage page. The controller is further configured to control the read/write head to read data from the target storage page or write data to the target storage page.

The magnetic tape system provided in this embodiment of this application includes the magnetic tape, the read/write head, the page picker, and the controller. The magnetic tape includes the plurality of storage pages arranged in the stacked manner. During read/write operations performed on the magnetic tape, the controller may determine the at least one target storage page from the plurality of storage pages, control the page picker to extract the target storage page, and control the read/write head to read the data from the target storage page or write the data to the target storage page. Since data is stored in the plurality of storage pages, and the page picker contacts the target storage page to extract the target storage page, the storage page bears less force compared with a magnetic tape wound around reels, thereby preventing breakage of the magnetic tape in the magnetic tape system from causing the entire magnetic tape system to fail.

In some embodiments, the storage page includes a storage region and an identification region. The storage region is configured to store data, and the identification region is configured to identify identification information of the storage page. The magnetic tape system further includes an identifier reader electrically connected to the controller. That the controller determines the at least one target storage page from the plurality of storage pages includes: The controller controls the identifier reader to identify the identification information of each storage page, and determines the at least one storage page based on the identification information.

According to the foregoing settings, during read/write operations performed on the magnetic tape in the magnetic tape system, the controller may control the identifier reader to find one or more target storage pages on which a read/write operation needs to be performed, and then extract the target storage page and perform the read/write operation on the target storage page. In this embodiment of this application, the identifier reader first identifies identification regions of the plurality of storage pages, so that addressing time for the part (that is, the target storage page) on which the read/write operation needs to be performed in the magnetic tape can be reduced, thereby reducing addressing time before reading from/writing to the magnetic tape, and improving read/write efficiency of the magnetic tape system.

In some embodiments, the storage page further includes a scan code, the scan code records the identification information, and the scan code is disposed in the identification region. The identifier reader includes a scanner or a camera.

According to the foregoing settings, the scanner or the camera identifies the scan code. This can simplify the process for the identifier reader to identify the identification information, and can implement simultaneous identification of a plurality of identification regions, thereby improving efficiency of identifying the identification information by the identifier reader, and reducing addressing time of the magnetic tape system.

In some embodiments, the identification region is disposed close to a first end of the storage page, and the identification regions are arranged in a stepped pattern.

According to the foregoing settings, the identification regions of the storage pages are located at the first end of the storage page, and the identification regions are arranged in the stepped pattern. In this case, in an arrangement direction of the storage region and the identification region of the storage page, a spacing between the identification regions can be reduced, enabling the identifier reader to identify each identification region.

In some embodiments, the magnetic tape includes a first storage group and a second storage group. The first storage group and the second storage group each include a plurality of the storage pages. The first ends of the storage pages in the first storage group are close to the first ends of the storage pages in the second storage group.

According to the foregoing settings, a spacing between identification regions of the storage pages in the first storage group and a spacing between identification regions of the storage pages in the second storage group can be reduced, enabling the identifier reader to identify each identification region.

In some embodiments, the magnetic tape further includes a storage box, the storage box is arranged to enclose an accommodating cavity, one end of the storage box is provided with an opening, each storage page is arranged in the accommodating cavity, and the first end of each storage page extends out of the accommodating cavity through the opening to expose the identification region.

According to the foregoing settings, the storage box may limit positions of the plurality of storage pages, and maintain a stacked form of the plurality of storage pages, to prevent the plurality of storage pages from being scattered in a process of extracting the storage pages or putting the storage pages back, affecting continuous reading/writing of the plurality of storage pages.

In some embodiments, the storage box includes a closed end and an open end that are opposite to each other, and the opening is disposed on the open end. The closed end is provided with an adjusting surface, and the adjusting surface is inclined relative to a plane on which the storage page is located. A second end of each storage page away from the first end abuts against the adjusting surface, to cause the identification regions to be arranged in the stepped pattern.

According to the foregoing settings, the opening is used for exposing an identification region of each storage page, so that the identifier reader identifies each identification region, and the adjusting surface is inclined relative to the plane on which the storage page is located, so that the identification regions of the storage pages are arranged in the stepped pattern. In this case, in the arrangement direction of the storage region and the identification region of the storage page, the spacing between the identification regions can be reduced, enabling the identifier reader further to identify each identification region.

In some embodiments, there are a plurality of read/write heads. The controller is configured to determine the at least one target storage page from the plurality of storage pages. There are a plurality of target storage pages. The controller controls the page picker to extract the plurality of determined target storage pages. The controller is further configured to control each read/write head to read data from a corresponding target storage page or write data to a corresponding target storage page.

According to the foregoing settings, the plurality of read/write heads may simultaneously read data from the plurality of target storage pages, or simultaneously write different data to corresponding target storage pages, thereby improving read/write efficiency of the magnetic tape system for the magnetic tape.

In some embodiments, the page picker includes a roller and a motor drivingly connected to the roller, and the motor is electrically connected to the controller.

That the page picker extracts the target storage page includes: The roller is brought into contact with the target storage page, and the motor drives the roller to rotate, to extract the storage page.

According to the foregoing settings, after the controller determines the target storage page, the controller may control the roller to contact an exposed part of the target storage page, and then control the motor to operate, so that the motor drives the roller to rotate, and the roller extracts the target storage page by friction. This can reduce tension on the target storage page, thereby preventing damage or breakage of the target storage page, and preventing breakage of the magnetic tape in the magnetic tape system from causing the entire magnetic tape system to fail.

According to another aspect, an embodiment of this application further provides a magnetic tape. The magnetic tape includes a plurality of storage pages arranged in a stacked manner, the storage pages include a storage region and an identification region, the identification region is disposed close to a first end of the storage page, the identification regions are arranged in a stepped pattern, the storage region is configured to store data, and the identification region is configured to identify identification information of the storage page.

In some embodiments, the magnetic tape further includes a first storage group and a second storage group. The first storage group and the second storage group each include a plurality of the storage pages. The first ends of the storage pages in the first storage group are close to the first ends of the storage pages in the second storage group.

According to the foregoing settings, a length of a step formed by the plurality of storage pages in a staggering direction can be reduced, enabling the identifier reader to identify each identification region.

In some embodiments, the storage page further includes a scan code, the scan code records the identification information, and the scan code is disposed in the identification region.

According to the foregoing settings, the process for the identifier reader to identify the identification information can be simplified, efficiency of identifying the identification information by the identifier reader is improved, and addressing time of a magnetic tape system is reduced.

In some embodiments, the magnetic tape further includes a storage box, the storage box is arranged to enclose an accommodating cavity, one end of the storage box is provided with an opening, each storage page is arranged in the accommodating cavity, and the first end of each storage page extends out of the accommodating cavity through the opening to expose the identification region.

According to the foregoing settings, the storage box may limit positions of the plurality of storage pages, and maintain a stacked form of the plurality of storage pages, to prevent the plurality of storage pages from being scattered in a process of extracting the storage pages or putting the storage pages back, affecting continuous reading/writing of the plurality of storage pages.

In some embodiments, the storage box includes a closed end and an open end that are opposite to each other, and the opening is disposed on the open end. The closed end is provided with an adjusting surface, and the adjusting surface is inclined relative to a plane on which the storage page is located. A second end of each storage page away from the first end abuts against the adjusting surface, to cause the identification regions to be arranged in the stepped pattern.

According to the foregoing settings, the opening is used for exposing an identification region of each storage page, so that the identifier reader identifies each identification region, and the adjusting surface is inclined relative to the plane on which the storage page is located, so that the identification regions of the storage pages are arranged in the stepped pattern. In this case, in an arrangement direction of the storage region and the identification region of the storage page, a spacing between the identification regions can be reduced, enabling the identifier reader further to identify each identification region.

According to still another aspect, an embodiment of this application further provides a drive, used in the foregoing magnetic tape. The drive includes a read/write head, a page picker, and a controller. The read/write head is configured to read data from a storage page or write data to the storage page. The controller is electrically connected to both the read/write head and the page picker. The controller is configured to determine at least one target storage page from a plurality of storage pages and control the page picker to extract the target storage page. The controller is further configured to control the read/write head to read data from the target storage page or write data to the target storage page.

In some embodiments, the drive further includes an identifier reader, the identifier reader is electrically connected to the controller, and that the controller determines the at least one target storage page from the plurality of storage pages includes: The controller controls the identifier reader to identify the identification information of each storage page, and determines the at least one storage page based on the identification information.

According to the foregoing settings, the identifier reader identifies identification regions of the plurality of storage pages, so that addressing time for the part (that is, the target storage page) on which a read/write operation needs to be performed in the magnetic tape can be reduced, thereby reducing addressing time before reading from/writing to the magnetic tape, and improving read/write efficiency of a magnetic tape system.

According to still another aspect, an embodiment of this application further provides an electronic device. The electronic device includes the foregoing magnetic tape system and a server, and the server is electrically connected to a controller. Alternatively, the electronic device includes the foregoing magnetic tape, the foregoing drive, and a server, and the server is electrically connected to a controller.

It may be understood that, for beneficial effects that can be achieved by the magnetic tape, the drive, and the electronic device provided in the foregoing embodiments of this application, refer to the beneficial effects of the foregoing storage apparatus. Details are not described herein again.

### BRIEF DESCRIPTION OF DRAWINGS

To describe technical solutions in this application more clearly, the following briefly describes accompanying drawings used for describing some embodiments of this application. It is clear that the accompanying drawings in the following descriptions are merely accompanying drawings in some embodiments of this application. A person of ordinary skill in the art may further derive other drawings from these accompanying drawings. In addition, the accompanying drawings in the following descriptions may be considered as diagrams, and are not intended to limit an actual size of a product, an actual procedure of a method, an actual time sequence of a signal, and the like in embodiments of this application.
FIG. 1 is a block diagram of an electronic device according to an embodiment of this application;
FIG. 2 is a diagram of a structure of a related technology according to an embodiment of this application;
FIG. 3 is a diagram of a structure of a plurality of storage pages arranged in a stacked manner according to an embodiment of this application;
FIG. 4 is a diagram 1 of a structure of a storage page according to an embodiment of this application;
FIG. 5 is a diagram of a structure of extracting a target storage page from a plurality of storage pages according to an embodiment of this application;
FIG. 6 is a diagram 2 of a structure of a storage page according to an embodiment of this application;
FIG. 7 is a diagram 3 of a structure of a storage page according to an embodiment of this application;
FIG. 8 is a diagram of a structure of a page picker including a roller in a magnetic tape system according to an embodiment of this application;
FIG. 9 is a diagram of a structure of a page picker including a roller and a motor in a magnetic tape system according to an embodiment of this application;
FIG. 10 is a diagram of a structure of a page picker including a suction cup in a magnetic tape system according to an embodiment of this application;
FIG. 11 is a diagram of a structure of a magnetic tape system including an identifier reader according to an embodiment of this application;
FIG. 12 is a diagram 1 of a structure of a magnetic tape system including a read/write head and a read/write platform according to an embodiment of this application;
FIG. 13 is a diagram 2 of a structure of a magnetic tape system including a read/write head and a read/write platform according to an embodiment of this application;
FIG. 14 is a diagram 3 of a structure of a magnetic tape system including a read/write head and a read/write platform according to an embodiment of this application;
FIG. 15 is a diagram of a structure of a magnetic tape system including a plurality of read/write heads according to an embodiment of this application;
FIG. 16 is a diagram of a structure of a magnetic tape system including a plurality of target storage pages according to an embodiment of this application;
FIG. 17 is a diagram 1 of a structure of a magnetic tape including a first storage group and a second storage group according to an embodiment of this application;
FIG. 18 is a diagram 2 of a structure of a magnetic tape including a first storage group and a second storage group according to an embodiment of this application; and
FIG. 19 is a diagram of a structure of a magnetic tape system including a storage box according to an embodiment of this application.

Reference numerals: 1: Electronic device; 3: Magnetic tape storage; 4: server; 5: Magnetic tape system; 6: Controller; 7: Magnetic tape; 8: Drive; 9: Read/write head; 10: First reel; 11: Second reel; 12: Storage page; 13: Page picker; 14: Target storage page; 15: Storage region; 16: Identification region; 17: Identifier reader; 18: Blank region; 19: Scan code; 20: Roller; 21: Motor; 22: Suction cup; 23: First mechanical arm; 24: Second mechanical arm; 25: Third mechanical arm; 26: Read platform; 27: First storage group; 28: Second storage group; 31: Storage box; and 32: Adjusting surface.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

The terms "first" and "second" mentioned below are merely intended for a purpose of description, and shall not be understood as an indication or implication of relative importance or an implicit indication of a quantity of indicated technical features. Therefore, a feature defined by "first", "second", or the like may explicitly or implicitly include one or more features.

In addition, in embodiments of this application, orientation terms such as "above", "below", "left", "right", "horizontal", and "vertical" are defined relative to placement orientations of components shown in the accompanying drawings. It should be understood that these directional terms are relative concepts that are used for relative description and clarification, and may vary correspondingly based on changes in the placement orientations of the components in the accompanying drawings.

In embodiments of this application, unless otherwise clearly specified and limited, a term "connection" should be understood in a broad sense. For example, the "connection" may be a fixed connection, a detachable connection, or an integral connection, may be a direct connection, or may be an indirect connection through an intermediate medium.

It should be noted that, in the descriptions of embodiments of this application, unless otherwise specified and limited, the terms "interconnection" and "connection" should be understood in a broad sense. For example, the terms may indicate a fixed connection or an integral connection, may indicate a mechanical connection or an electrical connection, or may indicate a direct connection, or may indicate an indirect connection through an intermediate medium, or may indicate internal communication between two components. A person skilled in the art may understand specific meanings of the terms in embodiments of this application based on a specific situation.

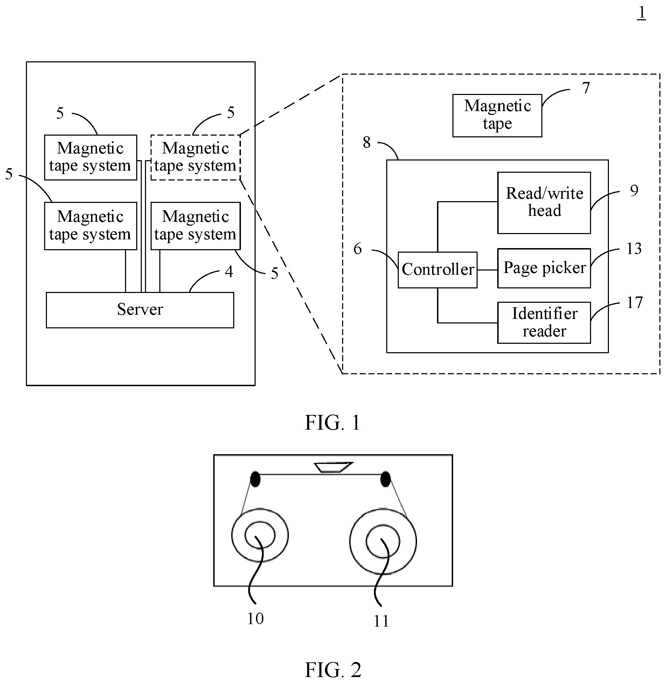

Refer to FIG. 1. An embodiment of this application provides an electronic device 1. The electronic device 1 may include a data center. The data center may include a plurality of magnetic tape systems 5 and a server 4. The server 4 is connected to the magnetic tape system 5, and the server 4 may obtain data in the magnetic tape system 5.

Still refer to FIG. 1. In the foregoing embodiment, the magnetic tape system 5 may include a magnetic tape 7 and a drive 8. The drive 8 is a tool for reading from/writing to the magnetic tape 7. The magnetic tape 7 may be covered with a magnetic storage material to form a storage surface. A plurality of magnetized areas arranged in an array are provided on the storage surface. A magnetic material in each magnetized area has two different magnetization states to represent "0" and "1" of binary information. The drive 8 may include a read/write head 9 and a controller 6. The read/write head 9 is electrically connected to the controller 6. The controller 6 controls the read/write head 9 to read data from the storage surface of the magnetic tape 7, or controls the read/write head 9 to write data to the storage surface of the magnetic tape 7. It may be understood that, in an implementation in which the magnetic tape system 5 is connected to the server 4, the server 4 may be connected to the controller 6 in the drive 8.

Refer to FIG. 2. In a related technology, a magnetic tape system includes a magnetic tape, a first reel 10, and a second reel 11. A magnetized area is provided on a magnetic tape in which data is stored. One end of the magnetic tape is fastened to the first reel 10, and the other end of the magnetic tape is fastened to the second reel 11. One part of the magnetic tape is wound around the first reel 10, and the other part is wound around the second reel 11. The first reel 10 is spaced apart from the second reel 11, and the magnetic tape cannot be fully wound on the first reel 10 and the second reel 11 at the same time. Space utilization in the magnetic tape system is not high. In addition, during read/write operations, when a magnetic tape drive drives the second reel 11 to rotate, a magnetic tape located between the first reel 10 and the second reel 11 can be gradually wound around the second reel 11 to drive the first reel 10 to rotate, so that a part of the magnetic tape on the first reel 10 is unwound, and a part of the magnetic tape wound around the first reel 10 gradually moves between the first reel 10 and the second reel 11. In addition, a magnetic tape at a specific position is located between the first reel 10 and the second reel 11, to cooperate with the magnetic tape drive to read data from the magnetic tape. However, addressing time of the magnetic tape system is increased, resulting in a long delay in reading/writing data. Moreover, when the magnetic tape drive drives rotation of the second reel 11 to rotate the first reel 10, the part of the magnetic tape located between the first reel 10 and the second reel 11 is subjected to tension from the first reel 10 and the second reel 11. If the tension exceeds a threshold that the magnetic tape can bear, the magnetic tape may break, and the first reel 10 does not continue to rotate with the rotation of the second reel 11. A part of the magnetic tape on the first reel 10 does not move between the first reel 10 and the second reel 11, and a magnetic tape connecting the first reel 10 and the second reel 11 fails (the magnetic tape cannot be read from or written to), causing the entire magnetic tape system to fail. Further, in the related technology, a thickness of the magnetic tape is large, to increase the threshold of tension that the magnetic tape can bear, and prevent breakage of the magnetic tape. However, when a magnetic tape having a large thickness is wound around the first reel 10 or the second reel 11, capacity density of the magnetic tape system is reduced.

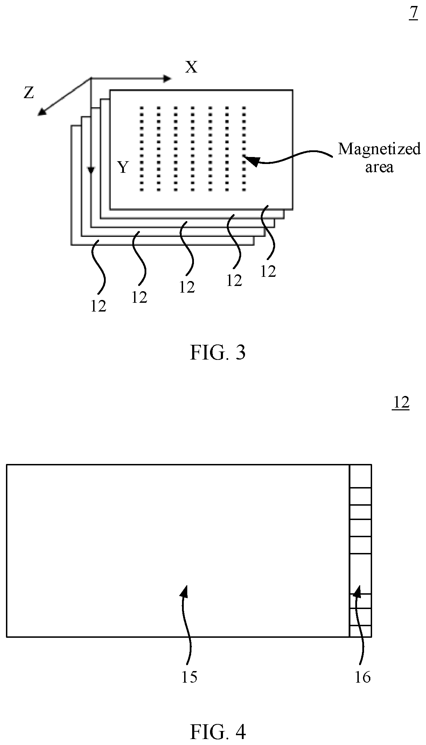

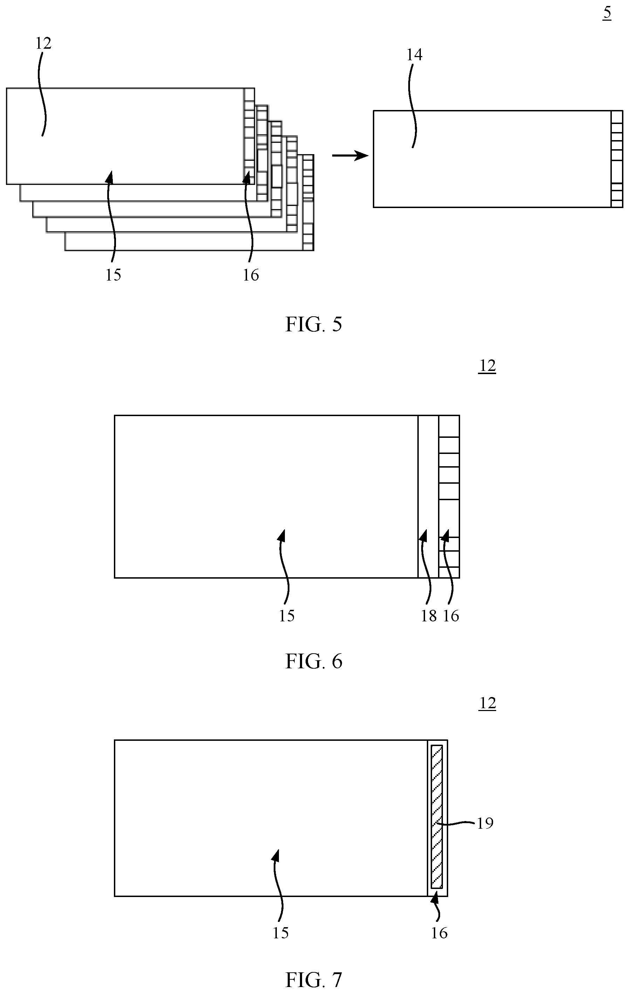

Refer to FIG. 1 and FIG. 3. The magnetic tape system 5 provided in embodiments of this application includes the magnetic tape 7. The magnetic tape 7 may include a plurality of storage pages 12 arranged in a stacked manner. Each storage page 12 is covered with a magnetic storage material. The storage page 12 is configured to store data. A plurality of magnetized areas that are arranged in an array in an X direction and a Y direction are provided in the storage page 12. The plurality of storage pages 12 are arranged in the stacked manner in a Z direction. The read/write head 9 may be configured to read data from the storage page 12 or write data to the storage page 12. The drive 8 may further include a page picker 13. The page picker 13 is also electrically connected to the controller 6. The controller 6 may be configured to determine at least one target storage page 14 (as shown in FIG. 5) from the plurality of storage pages 12, and control the page picker 13 to extract the target storage page 14. After the page picker 13 extracts the target storage page 14, the controller 6 is further configured to control the read/write head 9 to read data from the target storage page 14 or write data to the target storage page 14. The target storage page 14 may be defined as a storage page 12 on which a read/write operation needs to be performed on the data in the storage page 12.

The magnetic tape system 5 provided in embodiments of this application includes the magnetic tape 7, the read/write head 9, the page picker 13, and the controller 6. The magnetic tape 7 includes the plurality of storage pages 12 arranged in the stacked manner. During read/write operations performed on the magnetic tape 7, the controller 6 may determine the at least one target storage page 14 from the plurality of storage pages 12, control the page picker 13 to extract the target storage page 14, and control the read/write head 9 to read the data from the target storage page 14 or write the data to the target storage page 14. Since data is stored in the plurality of storage pages 12, and the page picker 13 contacts the target storage page 14 to extract the target storage page 14, the storage page 12 bears less force compared with a related technology in which a magnetic tape is wound around the first reel 10 (as shown in FIG. 2) and the second reel 11 (as shown in FIG. 2), thereby preventing breakage of the magnetic tape 7 in the magnetic tape system 5 from causing the entire magnetic tape system 5 to fail.

Still refer to FIG. 3. In the magnetic tape system 5 provided in embodiments of this application, the magnetic tape 7 includes the plurality of storage pages 12 arranged in the stacked manner. Compared with the related technology, space utilization in the magnetic tape system 5 is improved. In addition, during read/write operations performed on the magnetic tape 7, because the plurality of storage pages 12 are independent, if the target storage page 14 (as shown in FIG. 5) is damaged or broken in a process of extracting the target storage page 14 or during read/write operations performed on the target storage page 14, only the storage page 12 determined as the target storage page 14 fails, and another storage page 12 in the magnetic tape 7 still has the function of reading data or writing data, to prevent a part of the storage pages 12 from being damaged or broken, causing the entire magnetic tape system 5 to fail. In addition, during read/write operations performed on the magnetic tape 7, the target storage page 14 contacts only the page picker 13, that is, the target storage page 14 is subjected only to the tension of the page picker 13. This reduces tension on the target storage page 14 in the process of extracting the target storage page 14, so that a threshold of tension that the storage page 12 can bear can be appropriately reduced. In some embodiments, the threshold of the tension that the storage page 12 can bear may be reduced by decreasing a thickness of a single storage page 12. Because the thickness of the storage pages 12 is reduced, more storage pages 12 can be included in a magnetic tape 7 of a same volume, thereby improving capacity density of the magnetic tape system 5.

Refer to FIG. 1, FIG. 4, and FIG. 5. In embodiments of this application, the storage page 12 includes a storage region 15 and an identification region 16. The storage region 15 is configured to store data, and the identification region 16 is configured to identify identification information of the storage page 12. The magnetic tape system 5 further includes an identifier reader 17 electrically connected to the controller 6. The controller 6 may determine the at least one target storage page 14 from the plurality of storage pages 12. Identification information in an identification region 16 of each storage page 12 corresponds to data in a storage region 15 of the storage page 12, and the storage page 12 corresponding to the identification information may be uniquely determined based on the identification information. The controller 6 stores a mapping relationship between data and identification information. During read/write operations performed on the magnetic tape 7, the controller 6 first determines one piece of identification information (first identification information), then controls the identifier reader 17 to identify a plurality of pieces of identification information (a plurality of pieces of second identification information, where the plurality of pieces of second identification information include at least one piece of third identification information) in each storage page 12, then compares the first identification information with the second identification information to find third identification information identical to the first identification information in the second identification information, and determines a position of the target storage page 14 based on the third identification information. Then the controller 6 controls the page picker 13 to extract the target storage page 14, and controls the read/write head 9 to read data from the target storage page 14 or write data to the target storage page 14.

According to the foregoing settings, during read/write operations performed on the magnetic tape 7 in the magnetic tape system 5, the controller 6 may control the identifier reader 17 to find one or more target storage pages 14 on which a read/write operation needs to be performed, and then extract the target storage page 14 and perform the read/write operation on the target storage page 14. Compared with the related technology in which read/write operations are performed on the magnetic tape 7, the magnetic tape 7 sequentially passes through a read head between the first reel 10 and the second reel 11 from an end fastened to the second reel 11 to an end fastened to the first reel 10. In embodiments of this application, the identifier reader 17 first identifies identification regions 16 of the plurality of storage pages 12, so that addressing time for the part (that is, the target storage page 14) on which the read/write operation needs to be performed in the magnetic tape 7 can be reduced, thereby reducing addressing time before reading from/writing to the magnetic tape 7, and improving read/write efficiency of the magnetic tape system 5.

In the foregoing implementation, the storage region 15 of the storage page 12 is covered with a magnetic storage material, the identification region 16 and the storage region 15 are located on a same side of the storage page 12, and the storage pages 12 arranged in the stacked manner with their magnetic-storage-material covered sides facing a same direction. In the storage page 12, the identification region 16 is disposed close to a first end of the storage page 12, and the identification regions 16 are arranged in a stepped pattern. That is, in the plurality of storage pages 12 arranged in the stacked manner, an upper storage page 12 covers only a storage region 15 of a lower adjacent storage page 12, and exposed identification regions 16 are arranged in the stepped pattern to expose identification information in the identification regions 16.

According to the foregoing settings, the identification regions 16 of the storage pages 12 are located at the first end of the storage pages 12, and the identification regions 16 are arranged in the stepped pattern. In this case, in an arrangement direction of the storage region 15 and the identification region 16 in the storage page 12, all identification regions 16 can be exposed, enabling the identifier reader 17 to identify the identification regions 16. In addition, a spacing between the identification regions 16 can be reduced, so that the identifier reader 17 can simultaneously identify a plurality of identification regions, or a moving distance when the identifier reader 17 identifies each identification region 16 is reduced, thereby reducing addressing time.

Refer to FIG. 6. In the foregoing implementation, the storage page 12 may further include a blank region 18. The blank region 18 is located between the storage region 15 and the identification region 16. The blank region 18 is used as a buffer region between the storage region 15 and the identification region 16, to prevent, when the plurality of storage pages 12 are arranged in a stacked manner and the upper storage page 12 covers the lower adjacent storage page 12, the upper storage page 12 from covering a part of an identification region 16 of the lower adjacent storage page 12, or the lower storage page 12 from exposing a part of the storage region 15 in addition to the identification region 16, thereby avoiding interfere with identification of the identification region 16 by the identifier reader 17.

In some embodiments, the identification region 16 may also be covered with a magnetic storage material, and the identification information in the identification region 16 may also be represented by using different magnetization states. Correspondingly, the identifier reader 17 may be a head, and is configured to identify the identification information in the identification region 16.

Refer to FIG. 7. In some other embodiments, the storage page 12 further includes a scan code 19. The scan code 19 is provided in the identification region 16, the scan code 19 records the identification information, and the scan code 19 may include a bar code, a two-dimensional code, or the like. Correspondingly, the identifier reader 17 includes a scanner or a camera, to cooperate with the scan code 19 to identify each identification region 16. The scanner or the camera identifies the scan code. This can simplify the process for the identifier reader 17 to identify the identification information, and can implement simultaneous identification of a plurality of identification regions 16, thereby improving efficiency of identifying the identification information by the identifier reader 17, and reducing addressing time of the magnetic tape system 5.

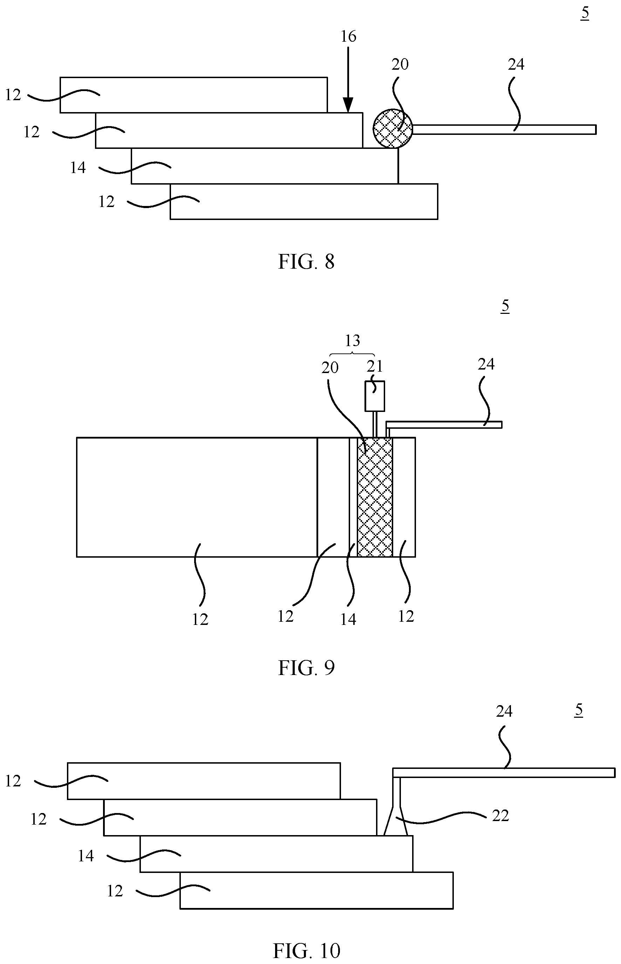

Refer to FIG. 8 and FIG. 9. In an implementation in which the identification regions 16 are arranged in the stepped pattern, the page picker 13 may include a roller 20 and a motor 21 drivingly connected to the roller 20, and the motor 21 is electrically connected to the controller 6 (as shown in FIG. 1). The controller 6 is configured to control the motor 21 to operate or stop operating, and the motor 21 is configured to drive the roller 20 to rotate. It may be understood that when the motor 21 operates, the roller 20 rotates, and when the motor 21 stops operating, the roller 20 stops rotating. The process in which the page picker 13 extracts the target storage page 14 includes: The roller 20 is brought into contact with the target storage page 14, and the motor 21 drives the roller 20 to rotate, to extract the storage page 12.

According to the foregoing settings, after the controller 6 determines the target storage page 14, the controller 6 may control the roller 20 to contact an exposed part of the target storage page 14, and then control the motor 21 to operate, so that the motor 21 drives the roller 20 to rotate, and the roller 20 extracts the target storage page 14 by friction. This can reduce the tension on the target storage page 14, thereby preventing damage or breakage of the target storage page 14, and preventing breakage of the magnetic tape 7 in the magnetic tape system 5 from causing the entire magnetic tape system 5 to fail.

Refer to FIG. 10. In the foregoing implementation, the page picker 13 may further include a suction cup 22 and an air pump (not shown in the figure) connected to the suction cup 22. The air pump is configured to extract air from the suction cup 22 or inject air into the suction cup 22. After the controller 6 determines the target storage page 14, the controller 6 may control the suction cup 22 to contact the exposed part of the target storage page 14, control the air pump to extract the air from the suction cup 22 to cause the suction cup 22 to be adhered to the target storage page 14, and then control and move the suction cup 22. The suction cup 22 extracts the target storage page 14 by adsorption force, so that the tension on the target storage page 14 can be reduced, thereby preventing the damage or the breakage of the target storage page 14, and preventing breakage of the magnetic tape 7 in the magnetic tape system 5 from causing the entire magnetic tape system 5 to fail.

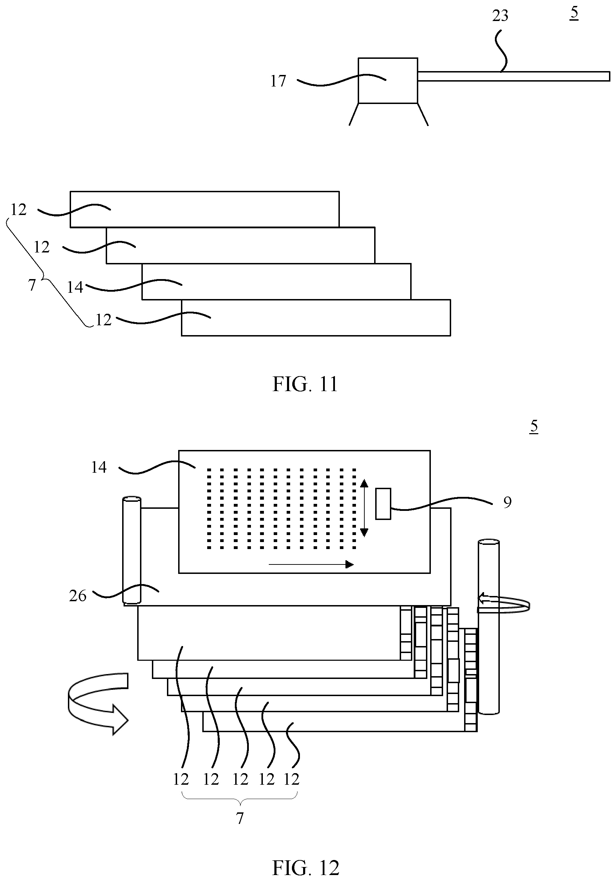

Refer to FIG. 11. In embodiments of this application, the magnetic tape system 5 includes a first mechanical arm 23. The first mechanical arm 23 is electrically connected to the controller 6 (as shown in FIG. 2), and the first mechanical arm 23 is connected to the identifier reader 17. An initial position of the identifier reader 17 is spaced apart from the magnetic tape 7. During read/write operations performed on the magnetic tape 7 in the magnetic tape system 5, the controller 6 is configured to control the first mechanical arm 23 to drive the identifier reader 17 to move to a position above each identification region 16 (if the initial position of the identifier reader 17 is already above each identification region 16, the identifier reader 17 does not need to be moved). In some implementations, an identification range of the identifier reader 17 may cover all the identification regions 16. The identifier reader 17 determines the position of the target storage page 14 based on identification information in an identification region 16 of a storage page 12 (that is, the target storage page 14) on which a read/write operation needs to be performed, and transfers the position of the target storage page 14 to the controller 6. In some other implementations, an identification range of the identifier reader 17 can cover only at least a part of the identification regions 16. The identifier reader 17 identifies identification information in a current identification region 16. In an identification process, the controller 6 synchronously controls the first mechanical arm 23 to drive the identifier reader 17 to sequentially move between the identification regions 16 until the identifier reader 17 completes identification of identification information in all the identification regions 16. In the process in which the identifier reader 17 identifies the identification information, similarly, the identifier reader 17 determines the position of the target storage page 14 based on the identification information in the identification region 16 of the target storage page 14, and transfers the position of the target storage page 14 to the controller 6.

Refer to FIG. 8 to FIG. 10. In the foregoing embodiments, the magnetic tape system 5 includes a second mechanical arm 24. The second mechanical arm 24 is electrically connected to the controller 6, and the second mechanical arm 24 is connected to the page picker 13. An initial position of the page picker 13 is spaced apart from the magnetic tape 7. During read/write operations performed on the magnetic tape 7 in the magnetic tape system 5, the controller 6 is configured to control the second mechanical arm 24 to drive the page picker 13 to move to a position above the exposed part of the target storage page 14, and bring the page picker 13 into contact with the target storage page 14. In an implementation in which the page picker 13 is the roller 20, after the roller 20 contacts the target storage page 14, the controller 6 controls the motor 21 to drive the roller 20 to rotate, to extract the target storage page 14. After the target memory 14 3 is extracted, the controller 6 controls the second mechanical arm 24 to drive the roller 20 to restore to the initial position. In an implementation in which the page picker 13 is the suction cup 22 and the air pump, after the suction cup 22 contacts the target storage page 14, the controller 6 controls the air pump to extract the air from the suction cup 22 to cause the suction cup 22 to be adhered to the target storage page 14, and controls the second mechanical arm 24 to drive the suction cup 22 to move in a direction away from the storage page 12, to extract the target storage page 14. After the target memory 14 3 is extracted, the controller 6 controls the air pump to inject the air into the suction cup 22, so that the suction cup 22 is separated from the target storage page 14, to put down the target storage page 14. Then the controller 6 controls the second mechanical arm 24 to drive the suction cup 22 to restore to the initial position. In the foregoing implementation, after the page picker 13 extracts the target storage page 14, after the read/write head 9 reads the data from the target storage page 14 or writes the data to the target storage page 14, the controller 6 controls the second mechanical arm 24 to drive the page picker 13 to place, back to the top of the plurality of storage pages 12 arranged in the stacked manner, a target storage page 14 that is read from/written to, and restores the page picker 13 to the initial position. With reference to the foregoing embodiment, if the identifier reader 17 and the first mechanical arm 23 are located on a path on which the second mechanical arm 24 drives the page picker 13 to move, the controller 6 may control the first mechanical arm 23 to drive the identifier reader 17 to move.

Refer to FIG. 12 to FIG. 14. In the foregoing embodiment, the magnetic tape system 5 includes a third mechanical arm 25 and a read platform 26. The third mechanical arm 25 is electrically connected to the controller 6. In some implementations, the third mechanical arm 25 is connected to the read/write head 9. A position of the read platform 26 is fixed and is spaced apart from the magnetic tape 7. The read/write head 9 is located above the read platform 26. During read/write operations performed on the magnetic tape 7 in the magnetic tape system 5, the page picker 13 extracts the target storage page 14 onto the read platform 26. The controller 6 is configured to control the third mechanical arm 25 to drive the read/write head 9 to sequentially move in magnetized areas of the target storage page 14, to read the data from the target storage page 14 or write the data to the target storage page 14. In some other implementations, the third mechanical arm 25 is connected to the read platform 26. An initial position of the read platform 26 is spaced apart from the magnetic tape 7. The read/write head 9 is located above the read platform 26, and a position of the read/write head 9 is fixed. During read/write operations performed on the magnetic tape 7 in the magnetic tape system 5, the page picker 13 extracts the target storage page 14 onto the read platform 26. The controller 6 is configured to control the third mechanical arm 25 to drive the read/write platform to move, so that the read/write head 9 sequentially moves relative to the magnetized areas of the target storage page 14, to read the data from the target storage page 14 or write the data to the target storage page 14.

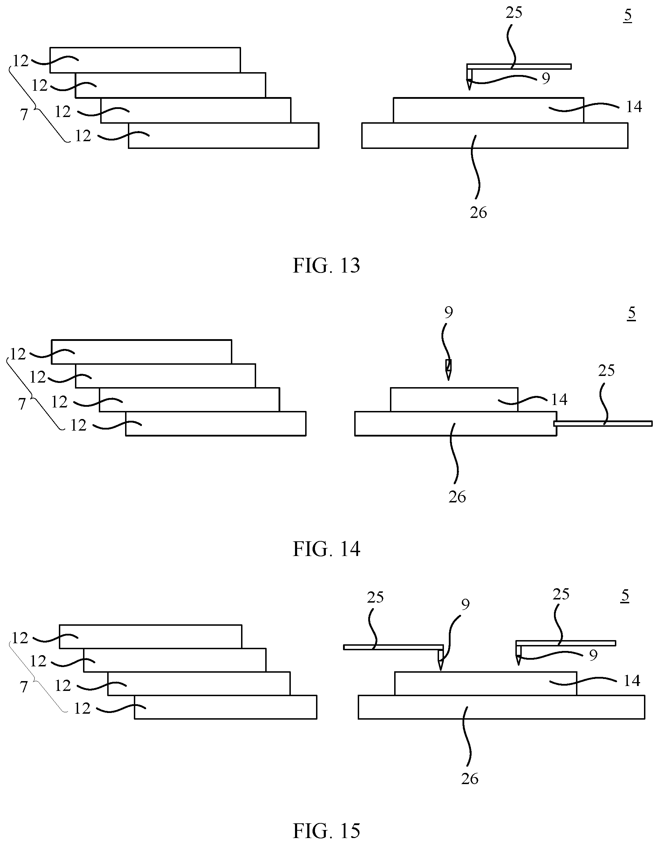

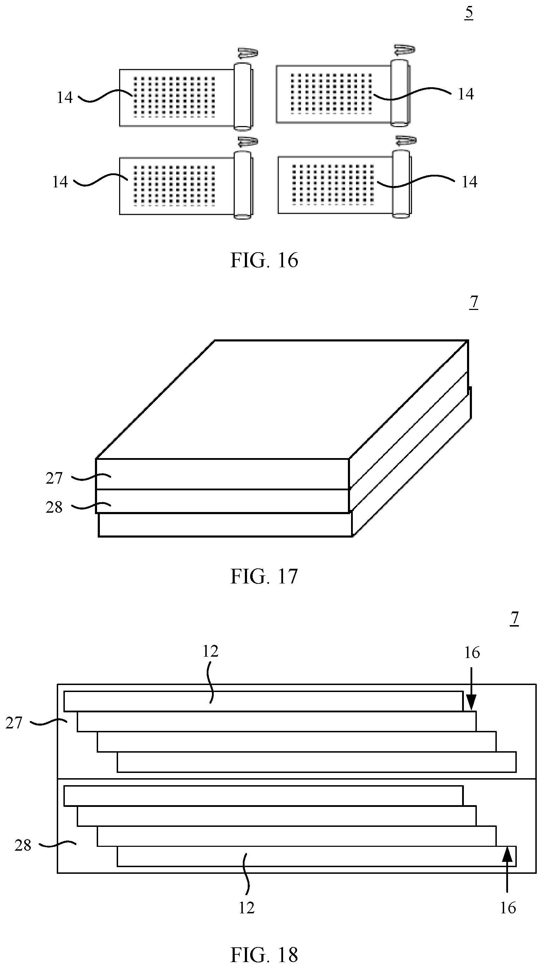

Refer to FIG. 15 and FIG. 16. In the foregoing embodiment, the controller 6 may also be configured to determine the at least one target storage page 14 from the plurality of storage pages 12. For example, there are a plurality of target storage pages 14, and the controller 6 controls the page picker 13 to extract the plurality of determined target storage pages 14. The plurality of target storage pages 14 may all be placed on the read platform 26. Alternatively, there may also be a plurality of read/write heads 9. A quantity of read/write heads 9 is greater than or equal to a quantity of target storage pages 14. Correspondingly, there may also be a plurality of third mechanical arms 25. The controller 6 is further configured to control each read/write head 9 to read data from a corresponding target storage page 14 or write data to the corresponding target storage page 14.

According to the foregoing settings, the plurality of read/write heads 9 may simultaneously read data from the plurality of target storage pages 14, or simultaneously write different data to corresponding target storage pages 14, thereby improving read/write efficiency of the magnetic tape system 5 for the magnetic tape 7.

Refer to FIG. 17 and FIG. 18. In some embodiments, the magnetic tape 7 may include a first storage group 27 and a second storage group 28. The first storage group 27 and the second storage group 28 are stacked in a thickness direction. The first storage group 27 and the second storage group 28 may each include a plurality of the storage pages 12 in FIG. 5. The first ends of the storage pages 12 in the first storage group 27 are close to the first ends of the storage pages 12 in the second storage group 28. In some implementations, a first end of the first storage group 27 is aligned with a first end of the second storage group 28 in the thickness direction. In this way, a length of a step formed by the plurality of storage pages 12 in a staggering direction can be reduced, enabling the identifier reader 17 to identify each identification region 16.

In an implementation in which the storage page 12 includes the identification region 16, initial parts of identification information in identification regions of the plurality of storage pages 12 that belong to the first storage group 27 are the same, and the initial parts of the identification information in the identification regions of the plurality of storage pages 12 that belong to the first storage group 27 are different from initial parts of identification information in identification regions of the plurality of storage pages 12 that belong to the second storage group 28. During read/write operations performed on the magnetic tape 7, the controller 6 first determines one piece of identification information (first identification information), and then controls the identifier reader 17 to identify a plurality of pieces of identification information (a plurality of pieces of second identification information, where the plurality of pieces of second identification information include at least one piece of third identification information) of the plurality of storage pages in the first storage group 27. If the initial part of the identification information corresponding to the storage page 12 in the first storage group 27 is different from an initial part of the first identification information, the controller 6 controls the identifier reader 17 to move to the second storage group 28, and compares the initial part of the identification information of the storage page 12 in the second storage group 28; and so on. If the initial part of the identification information corresponding to the storage page 12 in the first storage group 27 is the same as the initial part of the first identification information, the identifier reader 17 identifies complete identification information until the target storage page 14 is found.

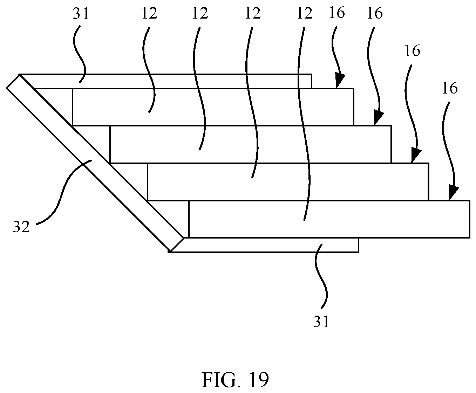

Refer to FIG. 19. In an implementation in which the magnetic tape 7 includes the plurality of storage pages 12 (as shown in FIG. 5) or the magnetic tape 7 includes the first storage group 27 and the second storage group 28 (as shown in FIG. 17), the magnetic tape 7 further includes a storage box 31, the storage box 31 is arranged to enclose an accommodating cavity, one end of the storage box 31 is provided with an opening, each storage page 12 is arranged in the accommodating cavity, and the first end of each storage page 12 extends out of the accommodating cavity through the opening to expose the identification region 16.

According to the foregoing settings, the storage box 31 may limit positions of the plurality of storage pages 12, and maintain a stacked form of the plurality of storage pages 12, to prevent a case in which the plurality of storage pages 12 are scattered in a process of extracting the storage pages 12 or putting the storage pages 12 back, affecting continuous reading/writing of the plurality of storage pages 12.

Still refer to FIG. 19. In the foregoing implementation, the storage box 31 includes a closed end and an open end that are opposite to each other, and the opening is disposed on the open end. The closed end is provided with an adjusting surface 32, and the adjusting surface 32 is inclined relative to a plane on which the storage page 12 is located. A second end of each storage page 12 away from the first end abuts against the adjusting surface 32, to cause the identification regions 16 to be arranged in the stepped pattern.

According to the foregoing settings, the opening is used for exposing an identification region 16 of each storage page 12, so that the identifier reader 17 (as shown in FIG. 11) identifies each identification region 16, and the adjusting surface 32 is inclined relative to the plane on which the storage page 12 is located, so that the identification regions 16 of the storage pages 12 are arranged in the stepped pattern. In this case, in the arrangement direction of the storage region 15 and the identification region 16 of the storage page 12, the spacing between the identification regions 16 can be reduced, enabling the identifier reader 17 to further identify each identification region 16.

Finally, it should be noted that the foregoing embodiments are merely intended for describing the technical solutions of embodiments of this application but not for limiting this application. Although this application is described in detail with reference to the foregoing embodiments, a person of ordinary skill in the art should understand that modifications may still be made to the technical solutions described in the foregoing embodiments or equivalent replacements are made to some or all technical features thereof, and such modifications or replacements do not cause the essence of corresponding technical solutions to depart from the scope of the technical solutions of embodiments of this application.

## Claims

1. A magnetic tape system, comprising:
a magnetic tape, wherein the magnetic tape comprises a plurality of storage pages arranged in a stacked manner, and the storage page is configured to store data;
a read/write head, wherein the read/write head is configured to read data from the storage page or write data to the storage page;
a page picker and a controller, wherein the controller is electrically connected to both the read/write head and the page picker, the controller is configured to determine at least one target storage page from the plurality of storage pages and control the page picker to extract the target storage page, and the controller is further configured to control the read/write head to read data from the target storage page or write data to the target storage page.

2. The magnetic tape system according to claim 1, wherein the storage page comprises a storage region and an identification region, the storage region is configured to store data, and the identification region is configured to identify identification information of the storage page;
the magnetic tape system further comprises an identifier reader electrically connected to the controller; and
that the controller determines the at least one target storage page from the plurality of storage pages comprises: the controller controls the identifier reader to identify the identification information of each storage page, and determines the at least one storage page based on the identification information.

3. The magnetic tape system according to claim 2, wherein the storage page further comprises a scan code, the scan code records the identification information, and the scan code is disposed in the identification region.

4. The magnetic tape system according to claim 3, wherein the identifier reader comprises a scanner or a camera.

5. The magnetic tape system according to any one of claims 2 to 4, wherein the identification region is disposed close to a first end of the storage page, and the identification regions are arranged in a stepped pattern.

6. The magnetic tape system according to claim 5, wherein the magnetic tape comprises a first storage group and a second storage group, the first storage group and the second storage group each comprise a plurality of the storage pages, and the first ends of the storage pages in the first storage group are close to the first ends of the storage pages in the second storage group.

7. The magnetic tape system according to claim 5 or 6, wherein the magnetic tape further comprises a storage box, the storage box is arranged to enclose an accommodating cavity, one end of the storage box is provided with an opening, each storage page is arranged in the accommodating cavity, and the first end of each storage page extends out of the accommodating cavity through the opening to expose the identification region.

8. The magnetic tape system according to claim 7, wherein the storage box comprises a closed end and an open end that are opposite to each other, and the opening is disposed on the open end; the closed end is provided with an adjusting surface, and the adjusting surface is inclined relative to a plane on which the storage page is located; and a second end of each storage page away from the first end abuts against the adjusting surface, to cause the identification regions to be arranged in the stepped pattern.

9. The magnetic tape system according to any one of claims 1 to 8, wherein there are a plurality of read/write heads, the controller is configured to determine the at least one target storage page from the plurality of storage pages, there are a plurality of target storage pages, the controller controls the page picker to extract the plurality of determined target storage pages, and the controller is further configured to control each read/write head to read data from a corresponding target storage page or write data to the corresponding target storage page.

10. The magnetic tape system according to any one of claims 1 to 9, wherein the page picker comprises a roller and a motor drivingly connected to the roller, and the motor is electrically connected to the controller; and
that the page picker extracts the target storage page comprises: the roller is brought into contact with the target storage page, and the motor drives the roller to rotate, to extract the storage page.

11. A magnetic tape, wherein the magnetic tape comprises a plurality of storage pages arranged in a stacked manner, the storage page comprises a storage region and an identification region, the identification region is disposed close to a first end of the storage page, the identification regions are arranged in a stepped pattern, the storage region is configured to store data, and the identification region is configured to identify identification information of the storage page.

12. The magnetic tape according to claim 11, wherein the magnetic tape comprises a first storage group and a second storage group, the first storage group and the second storage group each comprise a plurality of the storage pages, and the first ends of the storage pages in the first storage group are close to the first ends of the storage pages in the second storage group.

13. The magnetic tape according to claim 11 or 12, wherein the storage page further comprises a scan code, the scan code records the identification information, and the scan code is disposed in the identification region.

14. The magnetic tape according to claim 11 or 12, wherein the magnetic tape further comprises a storage box, the storage box is arranged to enclose an accommodating cavity, one end of the storage box is provided with an opening, each storage page is arranged in the accommodating cavity, and the first end of each storage page extends out of the accommodating cavity through the opening to expose the identification region.

15. The magnetic tape according to claim 14, wherein the storage box comprises a closed end and an open end that are opposite to each other, and the opening is disposed on the open end; the closed end is provided with an adjusting surface, and the adjusting surface is inclined relative to a plane on which the storage page is located; and a second end of each storage page away from the first end abuts against the adjusting surface, to cause the identification regions to be arranged in a stepped pattern.

16. A drive, used in the magnetic tape according to any one of claims 11 to 15, wherein the drive comprises:
a read/write head, wherein the read/write head is configured to read data from the storage page or write data to the storage page, and the controller is electrically connected to both the read/write head and the page picker; and
the page picker and the controller, wherein the controller is configured to determine at least one target storage page from a plurality of storage pages and control the page picker to extract the target storage page, and the controller is further configured to control the read/write head to read data from the target storage page or write data to the target storage page.

17. The drive according to claim 16, wherein the drive further comprises an identifier reader, the identifier reader is electrically connected to the controller, and that the controller determines the at least one target storage page from the plurality of storage pages comprises: the controller controls the identifier reader to identify the identification information of each storage page, and determines the at least one storage page based on the identification information.

18. An electronic device, comprising the magnetic tape system according to any one of claims 1 to 10 and a server, wherein the server is electrically connected to the controller; or
comprising the magnetic tape according to any one of claims 11 to 15, the drive according to claim 16 or 17, and a server, wherein the server is electrically connected to the controller.
